# EUROPÄISCHE PATENTSCHRIFT

(11) **EP 1 218 086 B1**
(45) Veröffentlichungstag und Bekanntmachung des Hinweises auf die Patenterteilung: **17.11.2004**
(21) Anmeldenummer: 00962411.5
(22) Anmeldetag: 30.08.2000
(51) Int. Cl.: B01D 35/153, B01D 35/16

(54) **VERSCHLUSSELEMENT FÜR EINE ÖFFNUNG**
CLOSURE ELEMENT FOR AN OPENING
ELEMENT DE FERMETURE POUR UN ORIFICE

(30) Priorität: 06.09.1999 DE 19942334
(43) Veröffentlichungstag der Anmeldung: 03.07.2002
(73) Patentinhaber: Mann + Hummel GmbH, 71638 Ludwigsburg (DE)
(72) Erfinder: PETSCHL, Thomas, 71636 Ludwigsburg (DE)
(74) Vertreter: Voth, Gerhard
(86) Internationale Anmeldenummer: PCT/EP2000/008463
(87) Internationale Veröffentlichungsnummer: WO 2001/017661

(56) Entgegenhaltungen:
- EP-A- 0 839 563
- DE-A- 19 808 043
- DE-U- 29 602 330
- US-A- 5 468 386
- US-A- 5 698 098

## Beschreibung

Die Erfindung betrifft ein Verschlußelement für eine Öffnung nach dem Oberbegriff des unabhängigen Anspruchs 1.

Aus der DE 296 02 331 ist ein Verschlußelement für eine Öffnung bekannt. Dieses dient dazu, eine Bodenablauföffnung in einem Ölfiltergehäuse zu verschließen. Hierzu ist dieses Verschlußelement als Federblech ausgestaltet. Dieses Federblech ist U-förmig gebogen, wobei ein Schenkel des gebogenen Federblechs einen Ablauf bzw. eine Öffnung verschließen kann. Das Verschließen erfolgt dadurch, dass ein Ölfilterelement eine Kraft auf einen der Schenkel des Federblechs ausübt, dadurch verschließt der weitere Schenkel den Ablauf bzw. die Öffnung.

Ein Nachteil bei diesem System liegt darin, dass die Abdichtwirkung zwischen dem Federblech und der Öffnung unzureichend ist. Es besteht natürlich die Möglichkeit, dort ein Dichtelement wie beispielsweise einen O-Ring vorzusehen, hierzu ist jedoch ein weiteres Bauteil erforderlich, welches die Funktionalität zwar verbessern kann, aber einen höheren Montageaufwand erfordert.

In DE-A-4428771 ist ein Verschlußelement mit einem Ventilteller und einer federnden Bügel beschrieben.

Der Erfindung liegt die Aufgabe zugrunde, ausgehend von DE-A-4428771 ein Verschlußelement für eine Öffnung zu schaffen, welches einfach aufgebaut ist, einen geringen Montageaufwand erfordert und zuverlässig die Öffnung abdichtet.

Diese Aufgabe wird ausgehend von dem Oberbegriff des unabhängigen Anspruchs durch dessen kennzeichnenden Merkmale gelöst.

Zur Befestigung des Verschlußelements im Bereich der Öffnung ist gemäß der Erfindung vorgesehen, dass der Ventilteller wenigstens zwei Schnapphaken aufweist, welche in die zu verschließende Öffnung eingreifen. Damit übernimmt die Öffnung selbst Haltefunktionen für das Verschlußelement.

Gemäß einer Ausgestaltung der Erfindung ist das Toleranzkompensationselement eine Kunststofffeder. Diese Kunststofffeder ist Teil des Verschlußelements. Zusätzliche Bauteile sind deshalb nicht erforderlich.

Eine weitere Ausgestaltung der Erfindung betrifft die federnde Kunststoffbügel, welche die Ventilfedern darstellen. Diese erstrecken sich von dem Ventilkörper nach Außen und bilden sozusagen federnde Abstützfüße.

Weiterbildungsgemäß sind diese Kunststoffbügel miteinander verbunden und bilden einen Auflagering. Dieser Auflagering kann dazu beitragen, dass ein Kippen des Ventiltellers vermieden wird.

Es ist weiterhin gemäß einer Ausgestaltung der Erfindung zweckmäßig, die Kunststoffbügel selbst so anzuordnen, dass sie gleichzeitig das Toleranzkompensationselement bilden. Hierzu weisen die Kunststoffbügel zusätzliche Stege auf, die entsprechen gestaltet sind.

Eine weitere Ausgestaltung befaßt sich mit dem Verschließen mehrerer Öffnungen. Durch entsprechende Anordnung eines zweiten Ventilsitzes können zwei Öffnungen gemeinsam verschlossen bzw. wechselweise verschlossen und geöffnet werden.

Diese und weitere Merkmale von bevorzugten Weiterbildungen der Erfindung gehen außer aus den Ansprüchen auch aus der Beschreibung und der Zeichnung hervor.

Weitere Einzelheiten der Erfindung werden in der Zeichnung anhand von schematischen Ausführungsbeispielen beschrieben. Hierbei zeigen
- Figur 1: eine Draufsicht auf ein Ventil,
- Figur 2: einen Befestigungsring für einen Ventilteller,
- Figur 3: eine Seitenansicht mit Befestigungselementen,
- Figur 4a: die konstruktive Ausgestaltung eines in Figur 3 gezeigten Ventils,
- Figur 4b: das in Figur 4a gezeigte Ventil in einer Schnittdarstellung und um 90° gedreht.

### Beschreibung der Ausführungsbeispiele

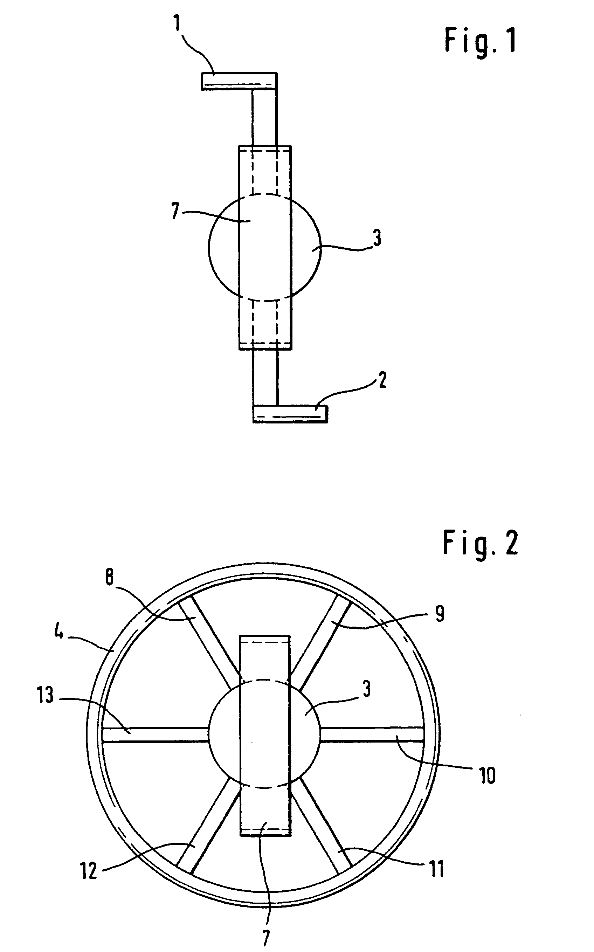

Die Draufsicht gemäß Figur 1 zeigt ein Kunststoffbauteil, bestehend aus einem Ventilteller 3, der eine hier nicht dargestellte Bohrung verschließt. Dieses Kunststoffbauteil weist oberhalb des Ventiltellers eine Kunststofffeder 7 auf. An dem Ventilteller sind ferner zwei federnde Kunststoffbügel 1 und 2 befestigt. Die Kunststoffbügel sind an ihren Enden mit abgewinkelten Auflageschuhen ausgestattet.

Figur 2 zeigt ebenfalls einen Ventilteller 3 mit einer Kunststofffeder 7. Hier sind Kunststoffbügel 8, 9, 10, 11, 12, 13 speichenförmig an dem Ventilteller angeordnet. Diese Kunststoffbügel sind mit einem gemeinsamen Befestigungsring 4 verbunden. Diese Variante hat eine besonders gleichmäßige Federkennlinie.

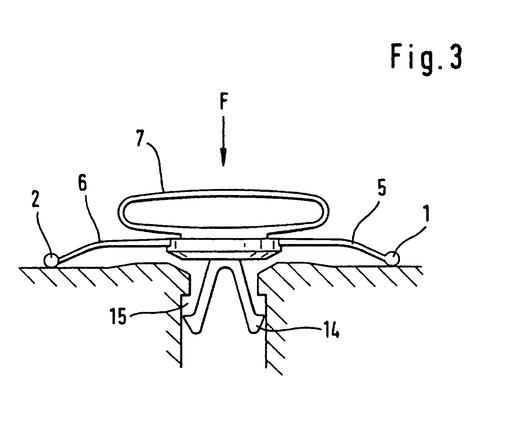

Figur 3 zeigt eine Seitenansicht mit den federnden Kunststoffbügel 1 und 2 mit ihren federnden Bereichen 5 und 6. Der Ventilteller 3 ist mit einer Schnappverbindung 14 versehen, die in eine hier nur schematisch angedeutete Bohrung bzw. Öffnung 15 einrasten kann. Oberhalb des Ventiltellers 3 befindet sich ein Toleranzkompensationselement 7. Auf dieses Element wirkt eine Kraft F, die die Öffnung 15 mit dem Ventilteller 3 verschließt. Die Kraft F wird beispielsweise bei der Anwendung des Verschlußelements in einem Ölfiltergehäuse durch ein Filterelement ausgeübt, wie es beispielsweise in der DE 296 02 331 beschrieben ist.

Figur 4a ist eine konstruktive Ausgestaltung eines in Figur 3 gezeigten Ventils. Unterhalb des Ventilteller 3 befindet sich ein Schnappelement 14, welches in eine hier nicht dargestellte Bohrung einrastet. Das Toleranzkompensationselement 7 ist entsprechend der zu erzeugenden Federkraft gestaltet. Es ist ersichtlich, dass das Verschlußelement ein Kunststoffspritzgießteil ist, welches in einfacher Weise hergestellt werden kann.

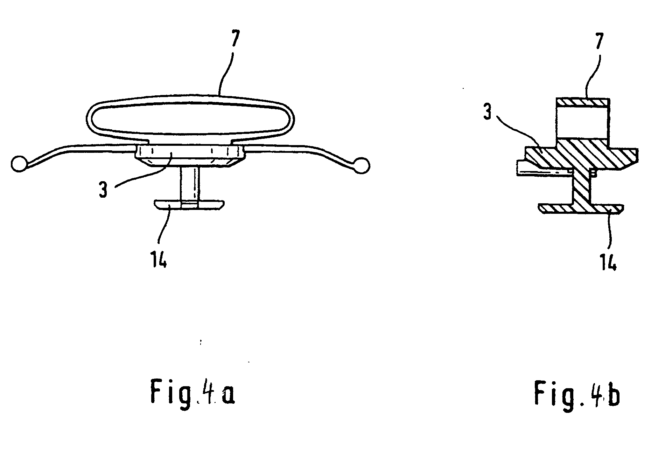

Figur 4b zeigt das in Figur 4a gezeigte Ventil in einer um 90° gedrehten Schnittdarstellung.

## Patentansprüche

1. Verschlußelement für eine Öffnung, wobei dieses aus einem Ventilteller (3) besteht und der Ventilteller federnde Kunststoffbügel (12) aufweist und wobei oberhalb des Ventiltellers ein Toleranzkömpensationselement (7) angeordnet ist, **dadurch gekennzeichnet, dass** der Ventilteller (3) wenigstens zwei Schnapphaken (14) aufweist, welche in die zu verschließende Öffnung (15) eingreifen.

2. Verschlußelement nach Anspruch 1, **dadurch gekennzeichnet, daß** das Toleranzkompensationselement (7) eine Kunststofffeder ist.

3. Verschlußelement nach einem der vorherigen Ansprüche, **dadurch gekennzeichnet, daß** die Kunststoffbügel miteinander verbunden sind und einen Auflagering (4) bilden.

4. Verschlußelement nach einem der vorherigen Ansprüche, **dadurch gekennzeichnet, daß** Kunststoffbügel das Toleranzkompensationselement bilden.

5. Verschlußelement nach einem der vorherigen Ansprüche, **dadurch gekennzeichnet, daß** zwei Öffnungen (15) gemeinsam verschlossen bzw. wechselweise verschlossen und geöffnet werden können.

## Claims

1. Closure element for an opening, wherein said closure element comprises a valve disk (3) and plastics material clips (12) spring-loading the valve disk and wherein a tolerance compensating element (7) is disposed above the valve disk, **characterised in that** the valve disk (3) includes at least two snap-type hooks (14), which engage in the opening (15) to be closed.

2. Closure element according to claim 1, **characterised in that** the tolerance compensating element (7) is a plastics material spring.

3. Closure element according to one of the preceding claims, **characterised in that** the plastics material clips are interconnected and form a supporting ring (4).

4. Closure element according to one of the preceding claims, **characterised in that** plastics material clips form the tolerance compensating element.

5. Closure element according to one of the preceding claims, **characterised in that** two openings (15) can be closed and opened in common or respectively two openings can be closed and opened alternately.

## Revendications

1. Elément de fermeture pour une ouverture, celui-ci se composant d'un disque de soupape (3) présentant des branches en matière plastique (12) élastiques, avec un élément de compensation des tolérances (7) étant disposé au-dessus du disque de soupape,
**caractérisé en ce que**
le disque de soupape (3) présente au moins deux crochets d'encliquetage (14), qui pénètrent dans l'ouverture (15) à fermer.

2. Elément de fermeture selon la revendication 1,
**caractérisé en ce que**
l'élément de compensation des tolérances (7) est un ressort en matière plastique.

3. Elément de fermeture selon l'une quelconque des revendications précédentes,
**caractérisé en ce que**
les branches en matière plastique sont reliées entre elles et forment un anneau d'appui (4).

4. Elément de fermeture selon l'une quelconque des revendications précédentes,
**caractérisé en ce que**
les branches en matière plastique forment l'élément de compensation des tolérances.

5. Elément de fermeture selon l'une quelconque des revendications précédentes,
**caractérisé en ce que**
deux ouvertures (15) peuvent être conjointement fermées ou alternativement fermées et ouvertes.
